# EUROPÄISCHE PATENTSCHRIFT

(11) **EP 1 144 218 B1**
(45) Veröffentlichungstag und Bekanntmachung des Hinweises auf die Patenterteilung: **05.04.2006**
(21) Anmeldenummer: 99963234.2
(22) Anmeldetag: 13.11.1999
(51) Int. Cl.: F02N 11/04, F02N 7/12

(54) **ANTRIEBSAGGREGAT FÜR EIN KRAFTFAHRZEUG**
DRIVE UNIT FOR A MOTOR VEHICLE
SYSTEME D'ENTRAINEMENT POUR VEHICULE

(30) Priorität: 17.11.1998 DE 19852941; 09.11.1999 DE 19953940
(43) Veröffentlichungstag der Anmeldung: 17.10.2001
(73) Patentinhaber: ROBERT BOSCH GMBH, 70442 Stuttgart (DE)
(72) Erfinder: HESSE, Ullrich, D-71563 Affalterbach (DE); STEINER, Dietmar, D-73642 Welzheim (DE); BORGES, Stephan, D-71640 Ludwigsburg (DE); WEISS, Hans-Ruediger, D-74589 Satteldorf (DE); DAMSON, Daniel, D-71254 Ditzingen (DE)
(86) Internationale Anmeldenummer: PCT/DE1999/003621
(87) Internationale Veröffentlichungsnummer: WO 2000/029246

(56) Entgegenhaltungen:
- EP-A- 0 445 407
- DE-A- 4 414 547
- DE-A- 19 745 167
- PATENT ABSTRACTS OF JAPAN vol. 006, no. 161 (M-151), 24. August 1982 (1982-08-24) & JP 57 076263 A (NISSAN MOTOR CO LTD), 13. Mai 1982 (1982-05-13)
- PATENT ABSTRACTS OF JAPAN vol. 012, no. 131 (M-688), 22. April 1988 (1988-04-22) & JP 62 253926 A (FUJI HEAVY IND LTD), 5. November 1987 (1987-11-05)
- PATENT ABSTRACTS OF JAPAN vol. 008, no. 005 (M-267), 11. Januar 1984 (1984-01-11) & JP 58 170852 A (SHIN NIPPON DENKI KK), 7. Oktober 1983 (1983-10-07)

## Beschreibung

### Stand der Technik

Die Erfindung geht aus von einem Antriebsaggregat für ein Kraftfahrzeug, nach der Gattung der unabhängigen Ansprüche.

Die GB 750 037 A zeigt ein Verfahren sowie eine Vorrichtung zum Starten eines internen Verbrennungsmotors, wobei dem internen Verbrennungsmotor in einem ersten Schritt erwärmtes öl zugeführt und anschließend der interne Verbrennungsmotor mit einem äußeren Zusatzmotor gestartet wird. Der äußere Zusatzmotor wird darüber hinaus dazu verwendet, einen Energiekonverter anzutreiben, mit dem Leistung in Wärme zur Erhitzung des Öls umgewandelt wird.

Aus der JP 570 56 263 A ist ein Antriebsaggregat für ein Kraftfahrzeug mit einem Fahrzeugantrieb und einem Zusatzantrieb zum Antreiben von in dem Kraftfahrzeug angeordneten Zusatzkomponenten bekannt. Um den Fahrzeugantrieb zum ersten Mal zu starten, wird zunächst der Zusatzantrieb mittels eines Generators in Betrieb gesetzt. Anschließend erfolgt der Start des Fahrzeugantriebs durch den zusatzantrieb über ein Zahnradgetriebe.

In der DE 197 45 167 A1 ist eine Anordnung mit einer Stirlingmaschine gezeigt. In einem Elektrofahrzeug ist eine Stirlingmaschine mit einem Generator verbunden, wobei die Stirlingmaschine einen Erhitzerkopf und einen Abwärme-Kühler aufweist. Der Kühler ist über einen Kühlmittelkreislauf mit einem Wärmetauscher für den Fahrgastraum und einem Wärmetauscher für eine Traktionsbatterie verbunden. Die Stirlingmaschine kann wahlweise als Motor oder Wärmepumpe betrieben werden. Dadurch werden zusätzliche Komponenten für Klimatisierung oder Heizung überflüssig.

Aus der DE 44 14 547 Al ist eine Fahrzeugstandklimaanlage bekannt, die eine Verdichtereinrictttung aufweist. Einem ersten, fahrzeugmotorisch angetriebenen Verdichter wird ein zweiter Verdichter parallel geschaltet, der mit einem aus der Fahrzeug-Zusatzbatterie gespeisten Gleichstromelektromotor angetrieben wird.

Die Zusatzantriebe sind jedoch nicht in allen Belangen optimal mit dem Antriebsmotor abgestimmt. Der Erfindung liegt die Aufgabe zugrunde, mit dem vorgeschlagenen Antriebskonzept eine weitere Optimierung vorzunehmen.

### Vorteile der Erfindung

Das erfindungsgemäße Antriegsaggregat für ein Kraftfahrzeug weist einen verbrennungsmotorischen Fahrzeugantrieb auf, wobei ein verbrennungsmotorischer Zusatzantrieb vorgesehen ist zum Antreiben weiterer im Kraftfahrzeug angeordneter Komponenten. Bei diesen Komponenten kann es sich um Starter/Generator und/oder um einen Klimakompressor, eine Servopumpe oder mechanisch getriebene Wasserpumpe handeln. Der Generator versorgt weitere elektrische Nebenaggregate wie beispielsweise Klimagebläse, Motorkühlgeblase und Kühlkreislaufpumpe. Anhand des Zusatzantriebs können die weiteren im Kraftfahrzeug angeordneten Komponenten unabhängig von dem Fahrzeugantrieb betrieben werden, ohne das Bordnetz zusätzlich zu belasten. Da der Fahrzeugantrieb nicht mehr die Versorgung der weiteren Komponenten übernehmen muß, ist dessen Betriebspunkt optimal auf die Anforderungen bezüglich des Antriebs des Kraftfahrzeugs, die sich durch stark schwankende Belastungsfälle auszeichnen, auszulegen. Der Zusatzantrieb hingegen kann stationär in einem günstigen Betriebspunkt gefahren werden. Der Zusatzantrieb bewegt auch die mechanisch betriebenen Nebenaggregate, die bislang entweder direkt oder über Keilriemen, Ketten oder Getriebe mechanisch vom Fahrzeugantrieb oder von einem Elektromotor angetrieben wurden. Dieser bislang wenig energieeffiziente Betrieb mechanisch angetriebener Nebenaggregate, wie er insbesondere bei hohen Drehzahlen des Fahrzeugantriebs auftritt, wird dadurch vermieden. Eine zusätzliche Belastung des Bordnetzes durch weitere elektrische Verbraucher, wie beispielsweise ein für den Betrieb der mechanisch angetriebenen Nebenaggregate vorgesehener Elektromotor, wird verringert. Außerdem gewährleistet dieses Antriebsaggregat auch bei Stillstand des Fahrzeugs eine dauerhafte Energieversorgung der weiteren im Kraftfahrzeug angeordneten Komponenten.

Der Zusatzantrieb ist in unmittelbarer Nähe zu dem Fahrzeugantrieb angeordnet, um mit der Abwärme des Zusatzantriebs den Fahrzeugantrieb zu erwärmen. Dadurch kann die Kaltstartphase des Fahrzeugantriebs verkürzt und damit das Emissionsverhalten verbessert werden. Außerdem verringert die kontinuierliche Bereitstellung von Zusatzwärme durch den Zusatzantrieb das Abkühlen des Fahrzeugantriebs und der Abgasreinigungskomponenten während der Stillstandsphasen im Start-Stop-Zyklus. Insbesondere die immer sparsamer und effizienter werdenden Fahrzeugantriebe wie direkteinspritzende Dieselmotoren benötigen im Winterbetrieb zusätzliche Wärmezufuhr, die in Verbindung mit einem geeigneten Abwärmekonzept durch den Zusatzantrieb bereitgestellt werden kann. Der Zusatzantrieb kann für den Fall der Standklimatisierung zusätzlich als Wärmequelle für thermisch betriebene Klimasysteme genutzt werden. Ein bei solchen Systemen sonst notwendiger Zusatzbrenner entfällt.

Für das Antriebsaggregat ist eine Leistungsregelung vorgesehen, die die maximale Abgabeleistung des Zusatzantriebs bedarfsgerecht unter Berücksichtigung verschiedener kritische Zustände wie dem Ladezustand einer Batterie oder einer sehr hohen Innenraumtemperatur auf den Klimakompressor und den Starter/Generator aufteilt. Da diese leistungsstarken Nebenaggregate über Steuereingänge in ihrer mechanischen Aufnahme- beziehungsweise Antriebsleistung und damit in ihrer mechanischen beziehungsweise elektrischen Ausgangsleistung regelbar sind, kann ein Zusatzantrieb mit relativ geringer Leistung eingesetzt werden. Über eine bedarfsgerechte, intelligente Regelung der Leistung der mechanischen Nebenaggregate (Klimakompressor, Generator) wird die vom Zusatzantrieb maximal lieferbare Abgabeleistung nicht überschritten. Gleichzeitig kann mit einer entsprechenden Regelung eine optimale Auslastung des Zusatzantriebs, der dann mit gutem Wirkungsgrad arbeitet, erreicht werden. Außerdem können die mechanischen Nebenaggregate auf eine konstante Drehzahl ausgelegt werden, sodaß keine Kompromisse (wie bei großen Drehzahlspreizungen) eingegangen werden müssen. Insbesondere der direkte Antrieb des Klimakompressors durch den Zusatzantrieb (vorzugsweise über eine Welle) ermöglicht einen Betrieb im energetisch optimalen Arbeitspunkt. Dadurch kann ein riemenloses Antriebskonzept realisiert werden, das sich durch geringen Verschleiß und Bauraum auszeichnet. Durch die Berücksichtigung des Ladezustands der Batterie ergibt sich weiterhin der Vorteil, dass selbst bei intermittierendem Betrieb des Fahrzeugantriebs die Batterie nachgeladen werden kann. Starke Zyklisierungen und Tiefentladungen der Batterie werden dadurch vermieden. Die Batterie wird geschont, was sich positiv auf ihre Lebensdauer und Zuverlässigkeit auswirkt.

In einer zweckmäßigen Ausgestaltung ist als Zusatzantrieb ein Motor mit äußerer Verbrennung wie ein Stirlingmotor verwendet. Er zeichnet sich gegenüber einem Motor mit innerer Verbrennung durch Laufruhe und günstige Abgaswerte aus. Der Kühlerteil des Stirlingmotors läßt sich als Zuheizer oder Standheizer im energetisch günstigen Wärmepumpenbetrieb einsetzen. Auch bei tiefen Außentemperaturen ist mit hinreichender Leistung eine Beheizung des Kraftfahrzeuginnenraums möglich. Außerdem kann der Stirlingmotor mit sogenannten natürlichen Kältemitteln, die ohnehin in der Atmosphäre vorhanden sind, betrieben werden. Als Arbeitsmittel dient beispielsweise Helium, Stickstoff, Luft oder Wasserstoff, auch mit geringen Beimischungen anderer Edelgase wie beispielsweise Krypton, Argon oder Xenon.

Weitere zweckmäßige Weiterbildungen ergeben sich aus weiteren abhängigen Ansprüchen und aus der Beschreibung.

### Zeichnung

Ein Ausführungsbeispiel ist in der Zeichnung dargestellt und wird im folgenden näher beschrieben.

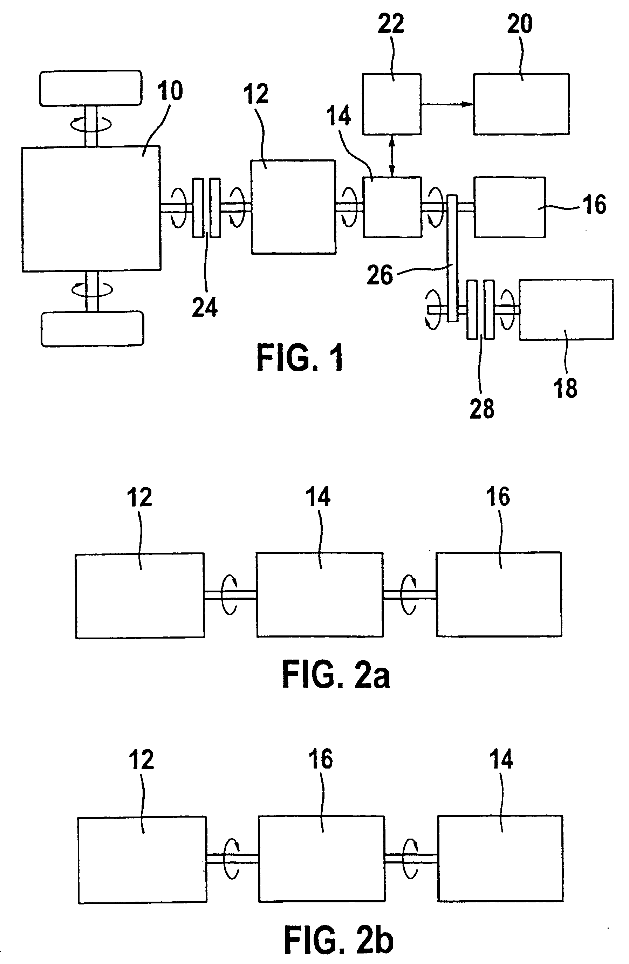

Es zeigen die Figuren 1, 2a, 2b und 3 den schematischen Aufbau eines Antriebsaggregats, wobei die Figuren 1, 2a und 2b lediglich das Verständnis der Erfindung erleichtern sollen, und es sich folglich nicht um Ausführungsbeispiele der Erfindung handelt.

Ein Fahrzeugantrieb 10 bewegt mittels einer Antriebsachse ein Kraftfahrzeug und ist über eine Antriebskupplung 24 mit einem Zusatzantrieb 12 mechanisch koppelbar. Der Zusatzantrieb 12 treibt über eine Welle einen Starter/Generator 14 an. Der Starter/Generator 14 ist elektrisch mit einer Batterie 22 verbunden, die elektrisch betriebene Nebenaggregate 20 speist. Die von dem Zusatzantrieb 12 bewegte Welle ist mit einem Klimakompressor 16 verbunden. Der Starter/Generator 14 ist zwischen Zusatzantrieb 12 und Klimakompressor 16 angeordnet. Über diese Welle in Verbindung mit einem Riemen 26 und gegebenenfalls einer Nebenaggregatskupplung 28 können mechanisch betriebene Nebenaggregate 18 angetrieben werden.

In der Variante gemäß Figur 2a schließt sich an den Zusatzantrieb 12 mechanisch gekoppelt der Starter/Generator 14 und anschließend der Klimakompressor 16 an. Bei der Variante gemäß Figur 2b treibt der Zusatzantrieb 12 zuerst den Klimakompressor 16 und anschließend den Starter/Generator 14 an.

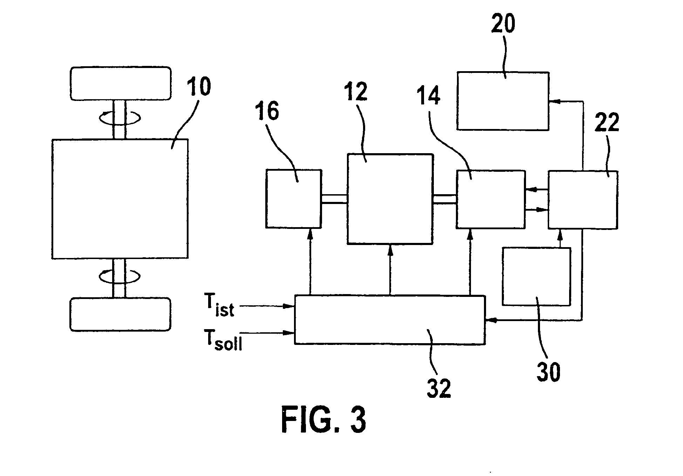

Das erfindungsgemäße Ausführungsbeispiel gemäß Figur 3 ergänzt das der Figur 1 um eine Leistungsregelung 32. Der Leistungsregelung 32 sind ein Ladezustandssignal der Batterie 22, die Innenraumisttemperatur Tist und die Innenraumsolltemperatur Tsoll zugeführt. Die Leistungsregelung 32 erzeugt Steuersignale für den Starter/Generator 14, den Klimakompressor 16 und den Zusatzantrieb 12. Die Batterie 22 wird nun zusätzlich von einer Photovoltaik 30 gespeist.

Als Fahrzeugantrieb 10 wird ein herkömmlicher Verbrennungsmotor verwendet. Die Batterie 22 versorgt als elektrisch betriebene Nebenaggregate 20 beispielsweise Klimagebläse, Motorkühlgebläse oder Kühlkreislaufpumpe. Diese könnten auch als mechanisch betriebene Nebenaggregate 18 in mechanischer Koppelung mit dem Zusatzantrieb 12 bewegt werden.

Der Zusatzantrieb 12 ist über die Welle mechanisch mit dem Klimakompressor 16 gekoppelt, der den für die Klimatisierung notwendigen Kompressionsvorgang durchführt. Für diesen Anwendungsfall bietet sich ein sogenannter außengeregelter Klimakompressor 16 an.

Im Batterieladebetrieb wandelt der als Generator betriebene Starter/Generator 14 die mechanische Energie des Zusatzantriebs 12 in elektrische Energie um, mit der die Batterie 22 gespeist wird. Aktiviert der Benutzer die elektrisch betriebenen Nebenaggregate 20, wird der Zusatzantrieb 12 in der Weise angesteuert, daß die beschriebene Generatorbetriebsweise erreicht wird.

Benötigt eine Bedienfunktion eines der mechanisch betriebenen Nebenaggregate 18, wird der Zusatzantrieb 12 aktiviert und die Nebenaggregatskupplung 28 geschlossen, so daß die mechanisch betriebenen Nebenaggregate 18 über die Welle, den Riemen 26 und die Nebenaggregatskupplung 28 angetrieben werden.

Befindet sich das Kraftfahrzeug im Stillstand, kann der Fahrzeugantrieb 10 ausgeschaltet werden, ohne daß die dauerhafte elektrische und/oder mechanische Energieversorgung der Nebenaggregate 18, 20 und des Klimakompressors 16 gefährdet wäre. Der Zusatzantrieb 12 stellt die Energieversorgung sicher.

Der Zusatzantrieb 12 ist erfindungsgemäß als Verbrennungsmotor ausgeführt. Die beim Betrieb des Zusatzantrieb 12 freigesetzte Abwärme kann dazu verwendet werden, den Fahrzeugantrieb 10 und temperaturschwankungsempfindliche Komponenten, wie Abgasreinigungskomponenten auf einem gewünschten Temperaturniveau zu halten. Vorteilhaft kann hierfür der Zusatzantrieb 12 in unmittelbarer Nähe zu dem Fahrzeugantrieb 10 und den Abgasreinigungskomponenten angeordnet werden. Auch ein Wärmekreislauf auf Luft- oder Kühlwasserbasis ist für diese Vorwärmfunktion möglich. Dadurch läßt sich das Abgasverhalten des Fahrzeugantriebs 10 verbessern.

Außerdem kann der Zusatzantrieb 12 als Standheizung betrieben werden. Die Abwärme des Zusatzantriebes 12 läßt sich als Wärmequelle für thermisch betriebene (adsorptive) Klimasysteme nutzen.

Als Zusatzantrieb 12 ist ein Verbrennungsmotor vorzusehen, der eine geringere Leistung aufweist als der Fahrzeugantrieb 10. Ein bekannter 4-Takt-Verbrennungsmotor, vorzugsweise mit dem gleichen Kraftstoff wie der Fahrzeugantrieb 10 betrieben, kommt hierbei in Frage.

In einer alternativen Ausgestaltung ist als Zusatzantrieb 12 ein sogenannter Stirlingmotor verwendet. Die prinzipielle Funktionsweise des Stirlingmotors ist in der DE 197 45 167 A1 hinreichend beschrieben. Dieser empfiehlt sich insbesondere für den Standheizungsbetrieb; als Arbeitsstoff des Stirlingmotors kommen z. B. Helium, Stickstoff, Luft oder Wasserstoff in Frage. Der Antriebsteil der Stirlingmaschine wird mittels Kraftstoff über einen Brenner beheizt. Die erzeugte mechanische Leistung dient zum Antrieb des Klimakompressors 16. Darüber hinaus kann die mechanische Leistung an den Starter/Generator 14 in beschriebener Weise zur elektrischen Energieerzeugung abgeben werden. Der Starter/Generator 14 dient im elektromotorischen Betrieb zum Start des Stirling-Antriebs und zum Schnellstart des Kühlers, bis der Antriebsteil ausreichend Leistung abgibt.

Bei dem Ausführungsbeispiel gemäß Figur 3 steht die Ansteuerung der verschiedenen Komponenten bei unterschiedlichen Betriebsfällen im Vordergrund. Der Zusatzantrieb bewegt sowohl den Klimakompressor 16 als auch den Starter/Generator 14 über dieselbe Welle. Damit wird die Drehzahl der Welle durch den Zusatzantrieb 12 vorgegeben. Dadurch lassen sich riemenlose Antriebskonzepte realisieren. Die Leistungsregelung 32 erzeugt Steuersignale für den Starter/Generator 14 und den Klimakompressor 16. Damit wird das Drehmoment dieser Komponenten vorgegeben. Die gezielte Drehmomentenvorgabe / mechanische Leistungsaufnahme zwischen beinahe 0 und 100 % läßt sich insbesondere bei einem außengeregelten Klimakompressor 16 beispielweise durch ein PWM-Signal vornehmen. Dieses beeinflußt die Scheibenstellung des außengeregelten Klimakompressors 16 und damit seine Förderleistung bzw. das für seinen Antrieb aufzubringende Drehmoment, das vom Zusatzmotor bereit zu stellen ist. Der Klimakompressor 16 wird in Abhängigkeit von der Soll-Ist-Abweichung der Kraftfahrzeuginnenraumtemperatur (Tsoll - Tist) und in Abhängigkeit von der einfallenden thermischen Wärme, z. B. durch direkte Sonneneinstrahlung oder warme Umgebungsluft, angesteuert, um die Innenraumtemperatur auf den gewünschten Sollwert zu regeln. Diese Regelung kann in der Leistungsregelung 32 integriert sein.

Auch die Drehmomentaufnahme des Starters/Generators 14 wird von der Leistungsregelung 32 gesteuert. Dies erfolgt durch ein elektrisches Steuersignal, das die Erregung des Generators 14 beeinflußt und damit auch dessen mechanische Antriebsleistung. Seine mechanische Antriebsleistung ist z. B. dann geringer, wenn er weniger Strom als vom Bordnetz benötigt generiert.

Durch die gezielte Vorgabe der Leistungsaufnahme der mechanischen Nebenaggregate (Klimakompressor 16, Starter/Generator 14) kann die maximale Abgabeleistung des Zusatzantriebs 12 bedarfsgerecht unter Berücksichtigung verschiedener kritischer Zustände wie beispielsweise dem Ladezustand der Batterie 22 oder einer sehr hohen Innenraumtemperatur Tist auf die mechanischen Nebenaggregate 14, 16 aufgeteilt werden. Die maximale Abgabeleistung des Zusatzantriebs 12 wird in diesen kritischen Fällen dann wahlweise entweder dem Klimakompressor 16 oder dem Starter/Generator 14 zur Verfügung gestellt. Die mechanischen Nebenaggregate 14, 16 werden generell so geregelt, daß die Summe der vom Generator 14 und vom Klimakompressor 16 geforderten Antriebsleistung die maximal vom Zusatzantrieb 12 lieferbare mechanische Abgabeleistung nicht übersteigt.

Nachfolgend werden verschiedene Betriebsarten beschrieben. Bei der Standklimatisierung ist der Fahrzeugantrieb 10 ausgeschaltet. Durch Erreichen einer vorgebbaren Aktivierungszeit oder eine Fernaktivierung über Mobiltelefon oder Fernbedienung wechselt das ruhende System in die Betriebsart "Standklimatisieurng". Hierbei wird dem Klimakompressor 16 ein gewisser Vorrang gegenüber dem Generator 14 eingeräumt, damit der Innenraum rasch gekühlt werden kann. Die Lüfter als elektrisch betriebene Nebenaggregate 20 werden ebenfalls aktiviert. Der Generator wird in Abhängigkeit vom Batterie-Ladezustand angesteuert. Bei schlechtem Ladezustand kann dann z. B. nur der Strom für die Lüfter generiert werden, um die Batterie 22 nicht weiter zu entladen. Bei gutem Ladezustand werden die Lüfter aus der Batterie 22 gespeist. Fordert der Klimakompressor 16 aufgrund einer hohen Soll-Ist-Abweichung bereits die maximale mechanische Antriebsleistung des Zusatzmotors 12 an, erzeugt die Leistungsregelung 32 für den Generator 14 in Abhängigkeit vom Batterie-Ladezustand ein Steuersignal, das diesen zur minimalen mechanischen Antriebsaufnahme veranlaßt. Wird der Klimakompressor 16 im Sinne einer Leistungsentnahme angesteuert, die unter der maximalen Antriebsleistung des Zusatzantriebs 12 liegt, steuert die Leistungsregelung 32 in Abhängigkeit von dem Ladezustandssignal der Batterie 22 den Generator 14 an, um gegebenenfalls die Batterie 22 aufzufüllen. Hierzu vergleicht die Leistungsregelung 32 das Ladezustandssignal mit einem vorgebbaren Grenzwert, dessen Unterschreiten einen Ladebedarf der Batterie 22 anzeigt. Der Generator 14 deckt den momentanen Strombedarf beispielsweise der Lüfter.

Bei der Betriebsart "Abkühlen nach Fahrtbeginn", die auftritt, wenn zuvor keine oder eine zu kurzzeitige Vor- bzw. Standklimatisierung aktiviert worden war, gibt der Zusatzantrieb 12 die ganze Leistung an den Klimakompressor 16 ab in Abhängigkeit von der Soll-Ist-Abweichung der Innenraumtemperatur und vom evtl. kritischen Ladezustand der Batterie. Die Erregung des Generators 14 ist bei nicht kritischem Ladezustand der Batterie abgeschaltet, die maximale Antriebsleistung steht damit der Innenraumklimatisierung zur Verfügung. Der Energiebedarf der elektrisch betriebenen Nebenaggregate 20 wird aus der Batterie 22 gedeckt, die nicht vom Generator 14 nachgeladen wird.

Bei der Betriebsart "Fahrbetrieb mit normalem Kühlen" befindet sich der Fahrzeugantrieb 10 in Betrieb und wird bei Fahrzeugstillstand abgeschaltet (Start-Stop-Betrieb), wenn sich das Fahrzeug für eine bestimmte Zeitspanne nicht bewegt. Der Zusatzantrieb 12 treibt sowohl den Klimakompressor 16 als auch den Generator 14 an. Die Leistungsregelung 32 steuert den Klimakompressor 16 so an, daß die gewünschte Fahrzeuginnenraumtemperatur Tsoll gehalten wird. Der Generator 14 wird in Abhängigkeit von dem Ladezustandssignal der Batterie 22 (beziehungsweise der Batteriespannung) angesteuert, um die Batterie 22 vollzuladen. Die Leistungsaufnahme des Generators 14 ist vorzugsweise so bemessen, daß sie sich aus der Differenz der von dem Zusatzantrieb 12 maximal abgebbaren Leistung und der vom Klimakompressor 16 aufgenommen Leistung, ermittelt aus der Soll-Ist-Abweichung der Innenraumtemperatur, ergibt.

In der Betriebsart "Fahrbetrieb ohne Kühlen" ist die Klimaanlage deaktiviert. Der Klimakompressor 16 ist abgeregelt. Der Generator 14 liefert den momentanen Strombedarf und lädt gegebenenfalls die Batterie 22. Der Zusatzantrieb 12 wird abgeschaltet, solange die Batterie 22 nicht zu stark entladen ist. Erreicht der Ladezustand der Batterie 22 einen kritischen Grenzwert, wird der Zusatzantrieb 12 wieder aktiviert, um den Generator 14 mechanisch anzutreiben. Die Batterie 22 wird dann durch den Generator 14 wieder nachgeladen.

Eine weitere Betriebsart ist für den Fall vorgesehen, daß die Batterie 22 stark entladen ist bei gleichzeitiger Kälteanforderung der Innenraumklimatisierung. Unterschreitet das Ladezustandssignal einen kritischen Grenzwert, wird der Klimakompressor 16 so weit abgeregelt, daß er (anfangs) keine mechanische Leistung dem Zusatzantrieb 12 entnimmt. Damit steht dem Generator 14 die maximale Leistung des Zusatzantriebs 12 vollständig zur Verfügung. Mit steigender Nachladung der Batterie 22 entnimmt der Klimakompressor 16 zunehmend mehr mechanische Leistung dem Zusatzantrieb 12. Wird ein unkritischer Ladezustand der Batterie 22 erreicht, lädt der Generator 14 mit einem geringeren Strom weiter, während gleichzeitig der Klimakompressor 16 je nach Innenraumtemperatur mit ausreichender oder verminderter Leistung Kälte produziert. Dem Klimakompresssor 16 wird nunmehr der Vorrang in der Ansteuerung eingeräumt.

In einem alternativen Ausführungsbeispiel ist noch eine zweite (Zusatz)batterie vorgesehen. Diese Zusatzbatterie hat eine relativ geringe, jedoch für Starterzwecke ausreichende Kapazität. Sie ist in der Regel in gutem Ladezustand. Die Batterie 22 hingegen besitzt eine entsprechend große Kapazität, die mindestens während einer Abkühlphase des heißen Fahrzeuginnenraums, in der der Klimakompressor 16 die gesamte Abgabeleistung des Zusatzantriebs 12 beansprucht und daher die Erregung des Generators 14 abgeschaltet ist, die elektrische Versorgung aller elektrisch betriebener Nebenaggregate 20 sicherstellt. Die Batterie 22 muß zyklen- und tiefentladungsfest sein, um in Phasen geringen Strombedarfs bei gleichzeitig fehlendem Kältebedarf den Strom aus der Batterie 22 zu liefern. Da der Zusatzantrieb 12 im Teillastbetrieb energetisch weniger effizient arbeitet als im Vollastbetrieb, kann er bei der genannten Batteriedimensionierung abgeschaltet werden. Parallel zu den Batterien könnten auch verlustarme Kondensatoren (z. B. sog. Super-Caps) eingebaut werden. Durch das Puffern elektrischer Energie wird ein intermittierender Betrieb des Zusatzantriebs 12 möglich, der dann immmer nur im Betriebspunkt mit maximalen Wirkungsgrad, das heißt bei Vollast, betrieben werden kann. Um die Betriebszeit des Zusatzantriebs 12 weiter zu minimieren, wird einPhotovoltaik-Generator 30 verwendet, der die Batterien ständig nachlädt. Parallel können auch bei abgestelltem Fahrzeug Lüfter mit dem Solarstrom gespeist werden. Dadurch läßt sich die Innenraumtemperatur weiter absenken. Dies hat den Vorteil, daß der Energiebedarf der Klimaanlage für das Abkühlen auf die Solltemperatur vor oder nach Fahrtantritt geringer ist.

## Patentansprüche

1. Antriebsaggregat für ein Kraftfahrzeug, mit einem verbrennungsmotorischen Fahrzeugantrieb (10), wobei ein verbrennungsmotorischer Zusatzantrieb (12) vorgesehen ist zum Antreiben im Kraftfahrzeug angeordneter Komponenten (10, 14, 18, 20), wobei Mittel vorgesehen sind, um durch die Abwärme des Zusatzantriebs (12) den Fahrzeugantrieb (10) und/oder eine Abgaskomponente zu erwärmen und wobei der Zusatzantrieb (12) mechanisch verbunden ist mit einem Starter/Generator (14) und mit einem Klimakompressor (16), **dadurch gekennzeichnet, dass** eine Leistungsregelung (32) vorgesehen ist, die die maximale Abgabeleistung des Zusatzantriebs (12) bedarfsgerecht unter Berücksichtigung verschiedener kritische Zustände wie dem Ladezustand einer Batterie (22) oder einer sehr hohen Innenraumtemperatur (Tist) auf den Klimakompressor (16) und den Starter/Generator (14) aufteilt.

2. Vorrichtung nach einem der vorhergehenden Ansprüche, **dadurch gekennzeichnet, daß** der Zusatzantrieb (12) mechanisch mit dem Fahrzeugantrieb (10) über eine Antriebskupplung (24) gekoppelt ist.

3. Vorrichtung nach einem der vorhergehenden Ansprüche, **dadurch gekennzeichnet, daß** als Zusatzantrieb (12) ein Motor mit äußerer Verbrennung wie ein Stirlingmotor verwendet wird.

4. Vorrichtung nach einem der vorhergehenden Ansprüche, **dadurch gekennzeichnet, daß** der Zusatzantrieb (12) elektrische Nebenaggregate (20) über den Starter/Generator (14) mit Energie versorgt.

5. Vorrichtung nach einem der vorhergehenden Ansprüche, **dadurch gekennzeichnet, daß** als Klimakompressor (16) ein außengeregelter Klimakompressor (16) vorgesehen ist.

6. Vorrichtung nach einem der vorhergehenden Ansprüche, **dadurch gekennzeichnet, daß** die Leistungsregelung (32) den Klimakompressor (16) und den Starter/Generator (14) in der Weise ansteuert, daß die Summe der mechanischen Leistungsaufnahmen von Klimakompressor (16) und Starter/Generator (14) einen vorgebbaren Grenzwert nicht übersteigt.

7. Vorrichtung nach einem der vorhergehenden Ansprüche, **dadurch gekennzeichnet, dass** Mittel vorgesehen sind, um durch Abwärme des Zusatzantriebs (12) die Fahrgastkabine zu erwärmen.

## Revendications

1. Groupe d'entraînement pour un véhicule automobile, comprenant un moyen d'entraînement de véhicule à moteur à combustion (10), un entraînement additionnel à moteur à combustion (12) pour entraîner des composants disposés dans le véhicule automobile (10, 14, 18, 20), des moyens pour chauffer, en utilisant la chaleur dégagée par l'entraînement supplémentaire (12), l'entraînement du véhicule (10) et/ou un composant du système des gaz d'échappement, l'entraînement additionnel (12) étant mécaniquement relié à un démarreur/générateur (14) et à un compresseur de climatisation (16),
**caractérisé en ce qu'**
une régulation de puissance (32) répartit la puissance délivrée maximale de l'entraînement additionnel (12) sur le compresseur de climatisation (16) et le démarreur/générateur (14) en fonction des besoins, en prenant en compte différents états critiques tels que l'état de charge d'une batterie (22) ou une température d'habitacle très élevée (Tist).

2. Dispositif selon l'une des revendications précédentes,
**caractérisé en ce que**
l'entraînement additionnel (12) est couplé mécaniquement avec l'entraînement du véhicule (10) par l'intermédiaire d'un accouplement (24).

3. Dispositif selon l'une des revendications précédentes,
**caractérisé en ce que**
comme entraînement additionnel (12) on utilise un moteur à combustion externe tel qu'un moteur Stirling.

4. Dispositif selon l'une des revendications précédentes,
**caractérisé en ce que**
l'entraînement additionnel (12) alimente en énergie des modules auxiliaires électriques (20) par le biais du démarreur/générateur (14).

5. Dispositif selon l'une des revendications précédentes,
**caractérisé en ce que**
le compresseur de climatisation (16) est un compresseur de climatisation à régulation externe (16).

6. Dispositif selon l'une des revendications précédentes,
**caractérisé en ce que**
la régulation de puissance (32) commande le compresseur de climatisation (16) et le démarrer/générateur (14) de telle manière que la somme des puissances absorbées du compresseur de climatisation (16) et du démarreur/générateur (14) ne dépasse pas une valeur limite prédéterminée.

7. Dispositif selon l'une des revendications précédentes,
**caractérisé en ce que**
des moyens permettent de chauffer l'espace réservé aux occupants en utilisant la chaleur dégagée par l'entraînement additionnel (12).

## Claims

1. Drive unit for a motor vehicle, having an internal-combustion-engine vehicle drive (10), with an auxiliary internal-combustion-engine drive (12) being provided to drive components (10, 14, 18, 20) arranged in the motor vehicle, with means being provided to heat up the vehicle drive (10) and/or an exhaust-gas component using the exhaust heat from the auxiliary drive (12), and with the auxiliary drive (12) being mechanically connected to a starter/generator (14) and to an air-conditioning compressor (16), **characterized in that** a power control system (32) is provided and distributes the maximum output power from the auxiliary drive (12) between the air-conditioning compressor (16) and the starter/generator (14) in accordance with requirements and taking into account various critical states, such as the charge state of a battery (22) or a very high interior temperature (Tist).

2. Apparatus according to the preceding claim, **characterized in that** the auxiliary drive (12) is mechanically coupled to the vehicle drive (10) via a drive clutch (24).

3. Apparatus according to either of the preceding claims, **characterized in that** the auxiliary drive (12) used is an engine with external combustion, such as a Stirling engine.

4. Apparatus according to one of the preceding claims, **characterized in that** the auxiliary drive (12) supplies power to secondary electrical units (20) via the starter/generator (14).

5. Apparatus according to one of the preceding claims, **characterized in that** the air-conditioning compressor (16) provided is an externally controlled air-conditioning compressor (16).

6. Apparatus according to one of the preceding claims, **characterized in that** the power control system (32) controls the air-conditioning compressor (16) and the starter/generator (14) in such a way that the total mechanical power consumption by the air-conditioning compressor (16) and the starter/generator (14) does not exceed a prescribable limit value.

7. Apparatus according to one of the preceding claims, **characterized in that** means are provided to heat up the passenger compartment using exhaust heat from the auxiliary drive (12).
